# EUROPÄISCHE PATENTSCHRIFT

(11) **EP 2 238 576 B1**
(45) Veröffentlichungstag und Bekanntmachung des Hinweises auf die Patenterteilung: **06.06.2018**
(21) Anmeldenummer: 09705647.7
(22) Anmeldetag: 30.01.2009
(51) Int. Cl.: G07C 9/00, H04L 29/06, H04W 12/08

(54) **VERFAHREN UND VORRICHTUNG ZUR STEUERUNG DER ZUTRITTSKONTROLLE**
METHOD AND DEVICE FOR REGULATING ACCESS CONTROL
PROCÉDÉ ET DISPOSITIF DE COMMANDE DU CONTRÔLE D'ACCÈS

(30) Priorität: 30.01.2008 AT 1452008
(43) Veröffentlichungstag der Anmeldung: 13.10.2010
(73) Patentinhaber: Evva Sicherheitstechnologie GmbH, 1120 Wien (AT)
(72) Erfinder: ULLMANN, Johannes, A-1120 Wien (AT)
(74) Vertreter: Keschmann, Marc
(86) Internationale Anmeldenummer: PCT/AT2009/000033
(87) Internationale Veröffentlichungsnummer: WO 2009/094683

(56) Entgegenhaltungen:
- EP-A- 1 336 937
- EP-A2- 1 562 153
- WO-A-2007/126375
- US-A- 6 072 402
- US-A1- 2005 242 921

## Beschreibung

Die Erfindung betrifft ein Verfahren zur Steuerung der Zutrittskontrolle mit Schließeinheiten, insbesondere Schlössern, und elektronischen Schlüsseln, bei welchem Zutrittsberechtigungen in einer zentralen Recheneinheit gespeichert und verwaltet werden, die Schlüssel entsprechend der jeweiligen Zutrittsberechtigung mit Berechtigungsinformationen für eine vorgegebene Auswahl an Schließeinheiten programmiert werden, die Berechtigungsinformationen im Falle eines Zutrittswunsches drahtlos von einem Schlüssel an eine Schließeinheit gesendet werden und in der Schließeinheit in Abhängigkeit von den empfangenen Berechtigungsinformationen die Zutrittsberechtigung ermittelt wird, wobei die Programmierung eines Schlüssels das Senden der Berechtigungsinformationen über ein drahtloses Telekommunikationsnetz an ein drahtloses mobiles Telekommunikationsgerät und das Übermitteln der vom mobilen Telekommunikationsgerät empfangenen Berechtigungsinformationen an einen Speicher des Schlüssels umfasst.

Die Erfindung betrifft weiters eine Vorrichtung zur Zutrittskontrolle umfassend eine Mehrzahl von Schließeinheiten, insbesondere Schlössern, und elektronischen Schlüsseln zum berührungslosen Sperren und Entsperren der Schließeinheiten,
- eine zentrale Recheneinheit zum Speichern und Verwalten von Zutrittsberechtigungen,
- Mittel, um die Schlüssel entsprechend der jeweiligen Zutrittsberechtigung mit Berechtigungsinformationen für eine vorgegebene Auswahl an Schließeinheiten zu programmieren,
- Mittel zum drahtlosen Übermitteln der Berechtigungsinformationen vom Schlüssel an die Schließeinheit,
wobei die Schließeinheit jeweils eine Auswerteschaltung aufweist, um die Zutrittsberechtigung auf Grund der erhaltenen Berechtigungsinformationen zu ermitteln, wobei die Vorrichtung weiters wenigstens ein drahtloses mobiles Telekommunikationsgerät umfasst, dass die Mittel zum Programmieren der Schlüssel Mittel zum Senden der Berechtigungsinformationen über ein drahtloses Telekommunikationsnetz an eine erste Kommunikationsschnittstelle des mobilen Telekommunikationsgeräts umfassen und dass Mittel zum Übermitteln der vom mobilen Telekommunikationsgerät empfangenen Berechtigungsinformationen an einen Speicher des Schlüssels vorgesehen sind.

Eine derartiges Verfahren und eine derartige Vorrichtung sind aus der EP 1336937 A1 und der US 2005/0242921 A1 bekannt.

In der EP 1562153 A2 ist ein Zutrittskontrollsystem mit einer Black-list-Funktionalität beschrieben.

Unter dem Begriff "Schließeinheiten" sind im Rahmen der Erfindung elektrische, elektronische oder mechatronische Schließeinheiten, insbesondere Schlösser, zu verstehen. Schließeinheiten können hierbei verschiedene Komponenten umfassen, wie z.B. Leseeinrichtungen für Identifikationsmedien, insbesondere elektronische Schlüssel, eine Schließelektronik und dgl.

Für die elektronische Zutrittskontrolle mit berührungslosen Systemen gibt es mehrere Möglichkeiten. Bisher bekannte RFID-Systeme bestehen aus einem elektronischen Schlüssel, auf welchem ein Identifikations- bzw. Zugangscode elektronisch gespeichert ist und der oft als "Transponder" bezeichnet wird, und einem Lesegerät. Dabei ist der Transponder meist ohne eigene Energiequelle aufgebaut und die benötigte Energie wird aus dem elektromagnetischen Feld des Lesegeräts bezogen. Weiters sind auch Funksysteme bekannt, bei denen der Schlüssel ein aktiver Sender mit eigener Energiequelle ist (z.B. Fernöffnung der Zentralverriegelung für Kraftfahrzeuge).

Bei größeren Schließsystemen mit einer Mehrzahl von Schließeinheiten und elektronischen Schlüsseln werden die Zutrittsberechtigungen zur einfacheren Verwaltung in einer zentralen Recheneinheit gespeichert. Die zentrale Recheneinheit weist hierbei üblicherweise eine Datenbank auf, in der die einzelnen Schließeinheiten, die Schlüssel und die jeweiligen Zutrittsberechtigungen verwaltet werden können. Über eine an die zentrale Recheneinheit angeschlossene Schreibeinrichtung können die elektronischen Schlüssel entsprechend der jeweils gewünschten Zutrittsberechtigungen mit Zugangscodes bzw. Berechtigungsinformationen programmiert werden.

Bei anderen Systemen kann die Zutrittsberechtigung ausschließlich in der jeweiligen Schließeinheit gespeichert werden, was den Vorteil aufweist, dass die Schlüssel selbst nicht notwendigerweise programmiert werden müssen, jedoch den Nachteil mit sich bringt, dass bei jeder Änderung der Zutrittsberechtigung die Schließeinheit mit entsprechenden Informationen versorgt werden muss, was oftmals einen direkten Zugang zur Schließeinheit erfordert.

Bisher bekannt ist weiters, dass die Komponenten an der Türe, wie beispielsweise das Lesegerät vernetzt sind, womit eine Änderung der Zutrittsberechtigung von einer Zentrale aus möglich ist, ohne dass ein von der Änderung der Zutrittsberechtigung betroffener Schlüssel zu einem bestimmten Punkt, wie zum Beispiel zu einer Programmierstation gebracht werden muss. Für den Fall hingegen, dass die Türen bzw. Schließeinheiten nicht vernetzbar sind, besteht nun das Problem darin, dass bei einer Änderung der Zutrittsberechtigung entweder die betroffenen Schlüssel vorhanden sein müssen oder die geänderten Informationen auf anderem Wege als über ein Netzwerk zur Tür gebracht werden müssen, zum Beispiel mit Hilfe eines Programmiergerätes.

Die vorliegende Erfindung zielt nun darauf ab, ein Verfahren und eine Vorrichtung zur Steuerung der Zutrittskontrolle dahingehend zu verbessern, dass Zutrittsberechtigungen in einfacher Weise vergeben und geändert werden können, ohne dass die jeweils betroffenen Schlüssel zu einer Programmierstation gebracht werden müssen und gleichzeitig auch ohne dass es einer Vernetzung der Schließeinheiten bedarf. Es soll somit von einer zentralen Kontrollstation aus jederzeit möglich sein, Zutrittsberechtigungen zu vergeben und zu verändern, ohne dass ein direkter Zugriff auf die Schließeinheiten vorhanden ist.

Zur Lösung dieser Aufgabe sieht die Erfindung ein Verfahren gemäss Anspruch 1 und eine Vorrichtung gemäss Anspruch 17 vor.

Dadurch, dass nun die Programmierung der Schlüssel mit Berechtigungsinformationen über ein drahtloses Telekommunikationsnetz erfolgt, können die Berechtigungsinformationen von der zentralen Recheneinheit an ein drahtloses mobiles Telekommunikationsgerät des jeweils gewünschten Benutzers bzw. Schlüsselinhabers gesendet werden, sofern das mobile Telekommunikationsgerät im jeweiligen Telekommunikationsnetz registriert ist. Die vom mobilen Telekommunikationsgerät empfangenen Berechtigungsinformationen können einem geeigneten Identifikationsmedium zur Verfügung gestellt werden, welches auf diese Art und Weise eine Schlüsselfunktion erhält. Erfindungsgemäß wird somit eine Art "online-Schlüssel" geschaffen, da der Schlüssel über das mobile Telekommunikationsnetz und das entsprechende mobile Endgerät umprogrammiert werden kann, um auf diese Art und Weise die Berechtigungsinformationen und damit die Zutrittsberechtigung des Schlüsselinhabers zu ändern.

Auf Grund der Möglichkeit der entfernten Programmierung von Schlüsseln ist es zur Änderungen der Zutrittsberechtigungen nicht mehr notwendig, einen Zugriff direkt auf die einzelnen Schließeinheiten zu erhalten. Die Schließeinheiten können nach der Installation und Initialisierung als autonome Einheiten arbeiten und erfordern insbesondere keine Netzwerkanbindung. Dies ist von besonderem Vorteil, wenn auf Grund der örtlichen Gegebenheiten eine Vernetzung von Schließeinheiten nicht gewünscht ist, beispielsweise, wenn bei kleineren Schließanlagen der Vernetzungsaufwand zu kostenintensiv wäre oder wenn bauliche Eingriffe in der Türe und im Bereich der Türe nicht erwünscht sind.

Wie bereits erwähnt müssen im Rahmen der vorliegenden Erfindung die von dem Kommunikationsgerät empfangenen Berechtigungsinformationen an ein Identifikationsmedium übermittelt werden, damit dieses eine Schlüsselfunktion erhält oder um die auf diesem gespeicherten Berechtigungsinformationen zu aktualisieren. Hierzu sind mehrere Möglichkeiten denkbar. Erfindungsgemäss wird zur Übermittlung der Berechtigungsinformationen vom mobilen Telekommunikationsgerät an den Schlüssel derart vorgegangen, dass der Schlüssel als externes, unabhängig vom Telekommunikationsgerät als Schlüssel verwendbares Identifikationsmedium ausgebildet ist, das über keine eigene Stromversorgung verfügt, dass die drahtlose Übermittlung der Berechtigungsinformationen vom Schlüssel an die Schließeinheit ohne eigene Stromversorgung des Schlüssels erfolgt, und dass das Übermitteln der vom mobilen Telekommunikationsgerät empfangenen Berechtigungsinformationen an einen Speicher des Schlüssels die Verwendung einer Schreib-/Leseeinrichtung für das externe Identifikationsmedium umfasst. Die erfindungsgemäße Vorrichtung ist in diesem Zusammenhang derart weitergebildet, dass der Schlüssel als externes, unabhängig vom Telekommunikationsgerät als Schlüssel verwendbares Identifikationsmedium ausgebildet ist, das über keine eigene Stromversorgung verfügt, und dass die Mittel zum Übermitteln der vom mobilen Telekommunikationsgerät empfangenen Berechtigungsinformationen an einen Speicher des Schlüssels eine Schreib-/Leseeinrichtung für das externe Identifikationsmedium umfasst. In einem derartigen Fall wird als Schlüssel ein externes Identifikationsmedium verwendet, das mit Hilfe einer Schreibeinrichtung programmiert wird, das heißt mit den jeweiligen Berechtigungsinformationen beschrieben wird. Dies erfordert naturgemäß einen zusätzlichen Schreibvorgang und eine entsprechende Schreibeinrichtung, jedoch ist der Schlüssel bei dieser Erfindungsvariante vom mobilen Telekommunikationsgerät unabhängig, sodass die Einsatzmöglichkeiten vergrößert werden. Außerdem benötigen derartige externe Identifikationsmedien keine eigene Stromversorgung, sodass die Schlüsselfunktion auch ohne Stromversorgung aufrecht bleibt, wohingegen bei der Verwendung des mobilen Telekommunikationsgeräts selbst als Schlüssel immer für eine ausreichende Stromversorgung Sorge zu tragen ist.

Bevorzugt ist die Erfindung derart weitergebildet, dass die Berechtigungsinformation wenigstens eine Schlosskennung enthält. Das Vorliegen einer bestimmten Schlosskennung im Schlüssel bedeutet dann beispielsweise, dass eine Zugangsberechtigung für die Schließeinheit mit der entsprechenden Schlosskennung vorhanden ist.

In diesem Zusammenhang wird erfindungsgemäß bevorzugt derart vorgegangen, dass die Ermittlung der Zutrittsberechtigung in der Schließeinheit den Vergleich der empfangenen Berechtigungsinformationen mit der in der Schließeinheit gespeicherten eigenen Schlosskennung umfasst. Die erfindungsgemäße Vorrichtung ist in diesem Fall derart weitergebildet, dass die Auswerteschaltung der Schließeinheit eine Vergleichsschaltung zum Vergleichen der empfangenen Berechtigungsinformationen mit der eigenen Schlosskennung umfasst. Die Ermittlung der Zutrittsberechtigung erfolgt hierbei somit unter Verwendung der in der Schließeinheit gespeicherten eigenen Schlosskennung, welche bevorzugt eine innerhalb des Schließsystems eindeutige Schlosskennung ist und welche der Schließeinheit bei deren Initialisierung zugeteilt und in die Schließeinheit einprogrammiert wurde.

Um das unautorisierte Auslesen einer Berechtigungsinformation, insbesondere einer Schlosskennung aus dem Schlüssel und das Anfertigen von Schlüsselkopien zu verhindern, wird bevorzugt derart vorgegangen, dass die Berechtigungsinformationen im Schlüssel verschlüsselt vorliegen. Die erfindungsgemäße Vorrichtung ist dann derart weitergebildet, dass die Auswerteschaltung der Schließeinheit eine Entschlüsselungseinrichtung umfasst.

Im einfachsten Falle wird dabei bevorzugt so vorgegangen, dass alle Berechtigungsinformationen mit einem allgemeinen Systemschlüssel verschlüsselt vorliegen. Dadurch kann von eventuell ausgelesenen Schlüsseln ohne das Wissen des allgemeinen Systemschlüssels keine Information über die tatsächlichen Schließberechtigungen erhalten werden. Ein allgemeiner Systemschlüssel, der in jedem Schlüssel und jeder Schließeinheit fest gespeichert ist und nicht ausgelesen werden kann, verhindert somit auch in einfacher Weise, dass Schließberechtigungen eines Schlüssels nachträglich verändert werden können.

Die Verschlüsselung kann hierbei in verschiedener Art und Weise erfolgen. Gemäß einer bevorzugten Verfahrensweise ist vorgesehen, dass den Schließeinheiten jeweils ein schlossindividueller Verschlüsselungsschlüssel zugeordnet wird, dass die Berechtigungsinformationen für eine Schließeinheit in der zentralen Recheneinheit mit dem jeweils zugeordneten schloss-individuellen Verschlüsselungsschlüssel verschlüsselt und als schloss-individuell verschlüsselte Berechtigungsinformationen an das Telekommunikationsgerät bzw. den Schlüssel gesendet und dort gespeichert werden und dass die schloss-individuell verschlüsselten Berechtigungsinformationen in der Schließeinheit unter Verwendung des dort gespeicherten, zugeordneten schloss-individuellen Verschlüsselungsschlüssels entschlüsselt werden. Die zentrale Recheneinheit verschlüsselt die Berechtigungsinformationen, also etwa die Schlosskennung, in diesem Fall daher derart, dass nur die Schließeinheit mit der entsprechenden Schlosskennung, für welche die Berechtigung vorliegt, auf Grund des dort vorliegenden schloss-individuellen Verschlüsselungsschlüssels die Berechtigungsinformationen entschlüsseln und in der Folge an Hand der entschlüsselten Information die Zutrittsberechtigung ermitteln kann. Das unauthorisierte Auslesen der Berechtigungsinformationen aus der zentralen Recheneinheit oder dem Schlüssel ist daher im Sinne der Umgebung der Zutrittskontrolle nicht zielführend, solange der jeweils verwendete schloss-individuelle Verschlüsselungsschlüssel nicht bekannt ist.

Zur weiteren Erhöhung der Sicherheit wird bevorzugt derart vorgegangen, dass den Schlüsseln jeweils ein schlüsselindividueller Verschlüsselungsschlüssel zugeordnet wird, dass die Berechtigungsinformationen für einen Schlüssel in der zentralen Recheneinheit mit dem jeweils zugeordneten schlüssel-individuellen Verschlüsselungsschlüssel verschlüsselt und als schlüssel-individuell verschlüsselte Berechtigungsinformationen an das Telekommunikationsgerät bzw. den Schlüssel gesendet und dort gespeichert werden und dass die schlüssel-individuell verschlüsselten Berechtigungsinformationen im Schlüssel unter Verwendung des dort gespeicherten, zugeordneten schlüssel-individuellen Verschlüsselungsschlüssels entschlüsselt werden. Bei dieser Vorgehensweise werden die Berechtigungsinformationen nicht schloss-individuell, sondern schlüssel-individuell verschlüsselt. Die an einen bestimmten Schlüssel gesendeten Berechtigungsinformationen werden hierbei mit dem diesem Schlüssel zugeordneten Verschlüsselungsschlüssel, z.B. mit einer Schlüssel-ID, verschlüsselt, sodass nur dieser Schlüssel die Berechtigungsinformationen entschlüsseln und verwenden kann. Das unauthorisierte Auslesen der verschlüsselten Berechtigungsinformationen vom Schlüssel ist daher insofern im Sinne der Umgebung der Zutrittskontrolle nicht zielführend als ein Entschlüsseln und Verwenden der Berechtigungsinformationen dann nicht mehr möglich ist. Zur weiteren Erhöhung der Sicherheit kann der schlüssel-individuelle Schlüssel in einfacher Weise mit dem allgemeinen Systemschlüssel gekoppelt werden (z.B. von diesem verschlüsselt werden).

Eine weitere Erhöhung der Sicherheit ist dann möglich, wenn die Berechtigungsinformationen sowohl mit einem schloss-individuellen Verschlüsselungsschlüssel als auch mit einem schlüssel-individuellen Verschlüsselungsschlüssel verschlüsselt werden. Das Verfahren wird in diesem Fall bevorzugt derart durchgeführt, dass die Berechtigungsinformationen in der zentralen Recheneinheit zuerst jeweils mit dem schloss-individuellen Verschlüsselungsschlüssel verschlüsselt werden, dass die schloss-individuell verschlüsselten Berechtigungsinformationen danach mit dem schlüssel-individuellen Verschlüsselungsschlüssel verschlüsselt werden, dass die schloss- und schlüssel-individuell verschlüsselten Berechtigungsinformationen an das Telekommunikationsgerät bzw. den Schlüssel gesendet und dort gespeichert werden, dass die schloss- und schlüssel-individuell verschlüsselten Berechtigungsinformationen im Schlüssel unter Verwendung des im Schlüssel gespeicherten schlüssel-individuellen Verschlüsselungsschlüssels entschlüsselt werden, dass die (teil-)entschlüsselten Berechtigungsinformationen an die Schließeinheit übermittelt und in der Schließeinheit unter Verwendung des dort gespeicherten schloss-individuellen Verschlüsselungsschlüssels entschlüsselt werden. Die Berechtigungsinformationen werden somit doppelt verschlüsselt, wobei die Entschlüsselung zweistufig erfolgt. Zunächst kann nur derjenige Schlüssel, für welchen die Berechtigungsinformationen beabsichtigt sind, die schlüssel-individuelle Verschlüsselung entschlüsseln. Es verbleibt im Schlüssel dann ein oder mehrere schloss-individuell verschlüsselte(s) Datenpaket(e) für eine oder mehrere Schließeinheiten. Nach Übertragung dieser Daten an eine Schließeinheit kann diese die Daten endgültig entschlüsseln und die entsprechende Aktion (z.B. Berechtigungsprüfung) vornehmen. Mit dieser Vorgehensweise könnten Kopierattacken entlang des Informationsweges verhindert werden. Des Weiteren müssen nicht die gesamten Informationswege gesichert sein, denn die Daten sind ohnehin nur von den jeweils berechtigten Empfängern entschlüsselbar.

Zur weiteren Erhöhung der Sicherheit gegen unautorisierte Handlungen wird bevorzugt derart vorgegangen, dass das übermitteln der Berechtigungsinformationen vom Schlüssel an die Schließeinheit über eine gesicherte Verbindung erfolgt. Die erfindungsgemäße Vorrichtung ist hierbei bevorzugt derart weitergebildet, dass Mittel zum Herstellen einer gesicherten Verbindung für das Übermitteln der Berechtigungsinformationen vom Schlüssel an die Schließeinheit vorgesehen sind. Bei einer derartigen Ausbildung wird verhindert, dass die Berechtigungsinformationen während der drahtlosen Übertragung vom Schlüssel an die Schließeinheit "abgehört" werden.

Weiters kann bevorzugt auch vorgesehen sein, dass das Senden der Berechtigungsinformationen von der zentralen Recheneinheit an das mobile Telekommunikationsgerät bzw. den Schlüssel über eine gesicherte Verbindung erfolgt.

Die Zutrittsberechtigung muss im Rahmen der Erfindung nicht notwendiger Weise anhand einer Schlosskennung erfolgen. Denkbar ist es auch, dass die Berechtigungsinformationen eine Schlüsselkennung enthält. Die Überprüfung der Zutrittsberechtigung in der Schließeinheit kann in einem solchen Fall naturgemäß nicht auf einem einfachen Vergleich mit der in der Schließeinheit gespeicherten Schlosskennung beruhen. Vielmehr könnte die Schließeinheit die Zutrittsberechtigung aus der jeweiligen Schlüsselkennung unter Anwendung eines Rechenalgorithmus ermitteln. Dieser Rechenalgorithmus müsste auch bei der Erstellung des Schlüssels in der zentralen Recheneinheit berücksichtigt werden. Die Berechtigungsinformationen können aber beides, eine Schlosskennung und die jeweilige Schlüsselkennung, enthalten. Dies ist bei einer bevorzugten Verfahrensweise von Vorteil, bei welcher die Ermittlung der Zutrittsberechtigung in der Schließeinheit zusätzlich den Vergleich einer vom Schlüssel empfangenen Schlüsselkennung mit einer in der Schließeinheit gespeicherten Schlüsselkennungsliste umfasst, wobei bei Übereinstimmung der empfangenen Schlüsselkennung mit einer Schlüsselkennung aus der Schlüsselkennungsliste der Zutritt verwehrt wird. Die erfindungsgemäße Vorrichtung ist hierbei bevorzugt derart weitergebildet, dass die Schließeinheit einen Speicher für eine Schlüsselkennungsliste aufweist, der mit der Auswerteschaltung in der Schließeinheit den Vergleich einer vom Schlüssel empfangenen Schlüsselkennung mit einer in der Schließeinheit gespeicherten Schlüsselkennungsliste umfasst, wobei bei Übereinstimmung der empfangenen Schlüsselkennung mit einer Schlüsselkennung aus der Schlüsselkennungsliste der Zutritt verwehrt wird.

Die in der Schließeinheit gespeicherte Schlüsselkennungsliste bildet daher eine so genannte "black list", enthaltend diejenigen Schlüsselkennungen, für die, unabhängig davon, ob sich auf Grund der vom Schlüssel übermittelten Schlosskennung eine Zutrittsberechtigung ergeben würde oder nicht, jedenfalls kein Zutritt gewährt werden soll. Dies ist zum Beispiel dann von besonderem Nutzen, wenn einzelnen Benutzer des Systems die Zutrittsberechtigung entzogen werden soll und das mobile Telekommunikationsgerät der betroffenen Benutzer von der zentralen Recheneinheit nicht erreichbar ist, um die Berechtigungsinformationen über diesen Weg entsprechend verändern zu können.

Gemäß der erfindungsgemässen Vorgangsweise wird hierbei derart vorgegangen, dass die Schlüsselkennungsliste in der zentralen Recheneinheit gespeichert und verwaltet wird, über das drahtlose Telekommunikationsnetz an das mobile Telekommunikationsgerät übermittelt, von dort mittels der Schreib-/Leseeinrichtung auf das externe Identifikationsmedium übertragen und drahtlos von dem Identifikationsmedium an die Schließeinheit gesendet und in der Schließeinheit gespeichert wird. Die Vorrichtung ist in diesem Zusammenhang bevorzugt derart weitergebildet, dass die zentrale Recheneinheit einen Speicher für die Schlüsselkennungsliste aufweist und Mittel zum Übermitteln der Schlüsselkennungsliste über das drahtlose Telekommunikationsnetz an das mobile Telekommunikationsgerät vorgesehen sind, die Schreib-/Leseeinrichtung zum Übertragen der Schlüsselkennungsliste vom Telekommunikationsgerät auf das externe Identifikationsmedium ausgebildet ist und Mittel und zum drahtlosen Senden der Schlüsselkennungsliste von dem Identifikationsmedium an die Schließeinheit vorgesehen sind. Bei einer derartigen Ausbildung kann die Schlüsselkennungsliste, die bevorzugt in allen Schließeinheiten eines Systems bereit gehalten wird, in einfacher Weise und innerhalb kürzester Zeit aktualisiert werden, um zusätzliche Schlüsselkennungen in die Liste einzufügen oder um Schlüsselkennungen aus der Liste zu streichen. Die Schlüsselkennungsliste einer bestimmten Schließeinheit wird hierbei aktualisiert, sobald der erste Benutzer, dessen mobiles Telekommunikationsgerät bzw. dessen Schlüssel von der zentralen Recheneinheit hinsichtlich der Schlüsselkennungsliste aktualisiert wurde, sich an die betreffende Schließeinheit annähert und einen Öffnungs- oder Schließvorgang initiiert. Wenn nun nach einem derartigen Aktualisierungsvorgang der in der Schließeinheit gespeicherten Schlüsselkennungsliste ein Benutzer einen Öffnungs- oder Schließvorgang initiieren möchte, dessen Schlüsselkennung zwischenzeitlich in die Schlüsselkennungsliste aufgenommen wurde, dessen mobiles Telekommunikationsgerät sich aber außerhalb der Reichweite des Telekommunikationsnetzwerks befand bzw. von der zentrale Recheneinheit nicht erreicht werden konnte, so wird diesem der Zugang dennoch verwehrt.

Um die Datenübertragung zwischen der zentralen Recheneinheit und den mobilen Telekommunikationsgeräten zu vereinfachen, wird bevorzugt derart vorgegangen, dass die Berechtigungsinformationen und/oder die Schlüsselkennungsliste als Kurztextmitteilung über das drahtlose Telekommunikationsnetz an das mobiles Telekommunikationsgerät übermittelt werden. Die erfindungsgemäße Vorrichtung ist in diesem Zusammenhang bevorzugt derart weitergebildet, dass ein Kurztextmitteilungsdienst vorgesehen ist zum Übermitteln der Berechtigungsinformationen und/oder der Schlüsselkennungsliste als Kurztextmitteilung über das drahtlose Telekommunikationsnetz an das mobiles Telekommunikationsgerät. Das Übersenden einer Kurztextmitteilung an das mobile Telekommunikationsgerät hat den Vorteil, dass der Empfang ohne Einwirkungsmöglichkeit bzw. ohne Mitwirkung des Benutzers erfolgt, sodass der Bedienungsaufwand minimiert wird. Zur erfolgreichen Datenübermittlung reicht es aus, dass das mobile Telekommunikationsgerät sich innerhalb des Sendebereichs des Telekommunikationsnetzes befindet und dass das Gerät angeschaltet ist. Es bedarf nicht notwendigerweise einer benutzerseitigen Anforderung an die zentrale Recheneinheit, um die Übermittlung von Berechtigungsinformationen, von Statusinformationen und dergleichen auszulösen.

Wenn nun aber jemand beispielsweise eine Zugangsberechtigung zu einer bestimmten Schließeinheit erhalten möchte, für die er bisher keine Zugangsberechtigung hat, so sollte es möglich sein, dass der Benutzer eine diesbezügliche Anfrage an die zentrale Recheneinheit sendet. Zu diesem Zweck wird das Verfahren bevorzugt derart durchgeführt, dass das Senden der Berechtigungsinformationen von der zentralen Recheneinheit an das mobile Telekommunikationsgerät als Antwort auf eine vom Benutzer vom mobilen Telekommunikationsgerät an die zentrale Recheneinheit gesendete Anfrage erfolgt.

Um die Verwaltung von größeren Schließanlagen mit einer Vielzahl von Schließeinheiten und Schlüsseln zu vereinfachen, ist es von Vorteil, wenn in der zentralen Recheneinheit eine Übersicht über den Status der einzelnen Schließeinheiten abgefragt werden kann. Zu diesem Zweck bedarf es einer Übertragung von Statusinformationen von den Schließeinheiten zur zentralen Recheneinheit. Das erfindungsgemäße Verfahren ist in diesem Zusammenhang bevorzugt derart weitergebildet, dass Statusinformationen der Schließeinheit, wie z.B. Batterieladezustand, Log-Daten oder dgl., drahtlos an den Schlüssel bzw. das mobile Telekommunikationsgerät übertragen und vom mobilen Telekommunikationsgerät über das drahtlose Telekommunikationsnetz an die zentrale Recheneinheit versendet werden. Die erfindungsgemäße Vorrichtung ist in diesem Zusammenhang derart weitergebildet, dass die Schließeinheit einen Speicher für Statusinformationen der Schließeinheit, wie z.B. Batterieladezustand, Log-Daten oder dgl. und Mittel zum drahtlosen Übertragen der Statusinformationen an den Schlüssel bzw. das mobile Telekommunikationsgerät aufweist. Wenn bei jedem Öffnungs- oder Schließvorgang der Schließeinheiten jeweils Statusinformationen übertragen werden, so ist es möglich, in der zentralen Recheneinheit Informationen zu jedem einzelnen Schließ- und Öffnungsvorgang abzurufen, sowohl jede Schließeinheit als auch jeden Schlüssel betreffend.

Es ist aber auch möglich, eine Datenübertragung in umgekehrter Richtung, von der zentralen Recheneinheit an einzelne Schließeinheiten, durchzuführen, abgesehen von der Übertragung von Berechtigungsinformationen. Eine derartige Datenübertragung kann beispielsweise der Programmierung von Schließeinheiten dienen, z.B. im Zusammenhang mit einer Erstinbetriebnahme, bei welcher jede Schließeinheit mit einer Schlosskennung und ggf. eines schloss-individuellen Verschlüsselungsschlüssels versehen wird. Hierbei dient das mobile Telekommunikationsgerät, über welches die Datenübertragung vorgenommen wird, als Programmiergerät für die Schließeinheiten.

Insgesamt wird mit der Erfindung die Steuerung der Zutrittskontrolle wesentlich vereinfacht, wobei eine Netzanbindung der Schließeinheiten nicht erforderlich ist. Die Ermittlung der Zutrittsberechtigung in der Schließeinheit erfolgt mit Vorteil daher lediglich auf Grund der vom Schlüssel erhaltenen und der gegebenenfalls in der Schließeinheit bereits gespeicherten Daten. Für die Ermittlung der Zutrittsberechtigung ist es daher nicht notwendig, dass die Schließeinheit zusätzlich zu den jeweils vom Schlüssel erhaltenen Daten für eine oder während einer Zutrittskontrolle weitere Daten von gesonderten Kontroll- oder Authentifizierungsstellen oder von der zentralen Recheneinheit erhält. Vielmehr ist hierbei vorgesehen, dass die Schließeinheiten als autonome Einheiten ohne Netzwerkanbindung ausgebildet sind.

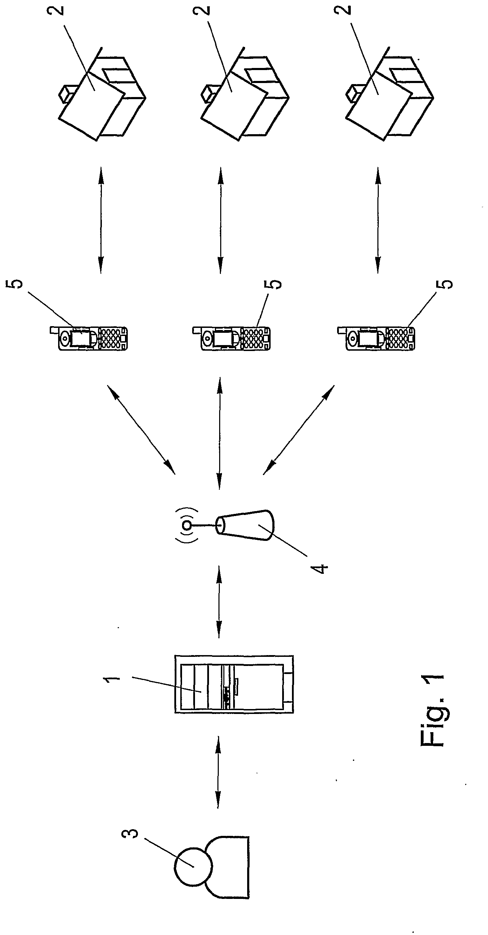

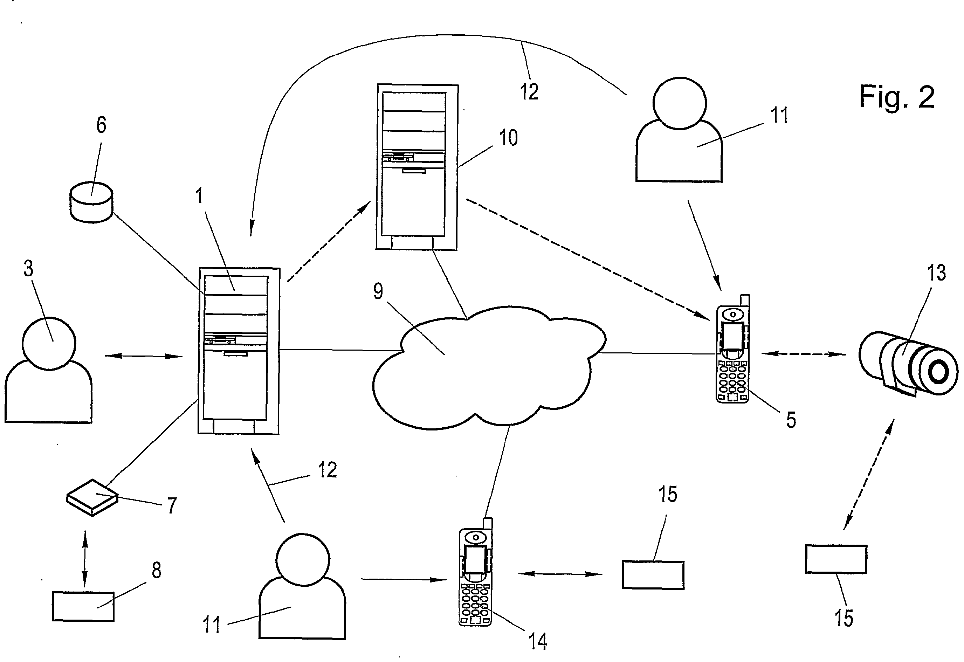

Bestandteile der Erfindung werden nachfolgend anhand von in der Zeichnung schematisch dargestellten Ausführungsbeispielen näher erläutert. In dieser zeigt Fig. 1 den schematischen Aufbau eines nicht erfindungsgemässen Zutrittskontrollsystems in einer ersten Ausbildung und Fig. 2 eine weitere Ausbildung eines Zutrittskontrollsystems.

In Fig. 1 ist eine zentrale Recheneinheit mit 1 bezeichnet. Die Objekte, zu denen der Zutritt mit Hilfe des Zutrittskontrollsystems kontrolliert werden soll, sind mit 2 bezeichnet und im vorliegenden Fall schematisch als Häuser dargestellt. Die Objekte 2 weisen jeweils eine Tür mit einer auf RFID basierenden Schließeinheit auf. Ein Administrator 3 verwaltet die zentrale Recheneinheit 1 und kann Zutrittsberechtigungen vergeben. Die zentrale Recheneinheit 1 ist an eine mobiles, drahtloses Telekommunikationsnetzwerk 4 angeschlossen, wie beispielsweise ein GSM-Handy-Netz und kann über das GSM-Netz 4 Berechtigungsinformationen an mobile Telekommunikationseinrichtungen 5 senden. Bei den mobilen Telekommunikationseinrichtungen 5 handelt es sich um Handys, die mit einer Schlüsselfunktion ausgestattet sind. Die Handys weisen beispielsweise ein RFID-Modul auf, in dessen Speicher die von der zentralen Recheneinheit 1 erhaltenen Berechtigungsinformationen geschrieben werden können. Im einfachsten Fall wird die Berechtigungsinformation als Schlosskennung an das mobile Telekommunikationsgerät 5 gesendet. Wenn nun in einem stark vereinfachten Beispiel die Schließeinheiten der in Fig. 1 dargestellten Objekte die Kennung 100, 101 und 102 aufweisen, so bedeutet die Übermittlung der Berechtigungsinformation an ein Telekommunikationsgerät 5 in Form der Kennung 101, dass dies einer Zugangsberechtigung für die Schließeinheit mit der Kennung 101 entspricht. Wenn nun das als Schlüssel verwendete Telekommunikationsgerät 5 in die Nähe einer Schließeinheit mit der Kennung 101 gebracht wird und im Zuge der Zutrittsberechtigungsprüfung die Berechtigungsinformation, nämlich die Schlosskennung "101" an die Schließeinheit übermittelt wird, so erkennt die Schließeinheit auf Grund eines Vergleichs der vom Schlüssel übermittelten Schlosskennung mit der eigenen Schlosskennung bei Übereinstimmung derselben das Vorhandensein einer Zutrittsberechtigung, worauf das Schloss freigegeben wird.

Aus der Darstellung in Fig. 2 ergeben sich nun verschiedene Anwendungsmöglichkeiten. Die zentrale Recheneinheit ist wiederum mit 1 und der Administrator mit 3 bezeichnet. Die zentrale Recheneinheit 1 weist eine Datenbank 6 auf bzw. ist mit einer derartigen Datenbank verbunden, auf welcher die Zutrittsberechtigungen gespeichert und verwaltet werden. Die zentrale Recheneinheit 1 ist weiters mit einer Schreibeinheit 7 verbunden, die beispielsweise als Schreibgerät für RFID-Tags bzw. Transponder ausgebildet ist. Mit 8 ist ein RFID-Transponder dargestellt, der von der Schreibeinheit 7 beschrieben werden kann. Dies entspricht im Prinzip dem herkömmlichen Verfahren, wie RFID-Transponder programmiert werden können.

Eine Datenverbindung zwischen einem mobilen Telekommunikationsgerät 5 und der zentralen Recheneinheit 1 kann nun gemäß der Darstellung in Fig. 2 auf verschiedene Art und Weise erfolgen. Beispielsweise kann eine drahtlose Verbindung über verschiedene Verbindungsprotokolle, wie beispielsweise W-LAN, GSM oder UMTS mit dem Internet 9 hergestellt werden, wobei auch die zentrale Recheneinheit 1 mit dem Internet 9 verbunden ist. Alternativ oder zusätzlich dazu kann ein SMS-Gateway 10 vorgesehen sein, sodass der Datenaustausch zwischen der zentralen Recheneinheit 1 und dem mobilen Telekommunikationsgerät 5 über einen Kurzmitteilungsdienst erfolgt.

Der Benutzer 11 des mobilen Telekommunikationsgeräts 5 kann hierbei, wie mit der Linie 12 angedeutet, auf die zentrale Recheneinheit 1 zugreifen und, wenn er die erforderlichen Zugriffsrechte auf die zentrale Recheneinheit 1 aufweist, die Zugangsberechtigungen verwalten. Wenn es sich bei dem Benutzer 11 nicht um den Administrator handelt, so ist der ihm auf die zentrale Recheneinheit 1 gewährte Zugriff derart gestaltet, dass er lediglich seine eigenen Zutrittsberechtigungen verwalten und gegebenenfalls ändern kann. Der Zugriff auf die zentrale Recheneinheit 1 kann beispielsweise über ein WEB-Interface erfolgen, sodass der Benutzer 11 seine Zutrittsberechtigungen mit Hilfe jedes internetfähigen Computers verwalten kann.

Das in Fig. 2 mit 5 bezeichnete mobile Telekommunikationsgerät kann ein Handy sein, das mit einem NFC-Modul ausgestattet ist. In diesem Fall werden die von der zentralen Recheneinheit 1 erhaltenen Berechtigungsinformationen dem eingebauten NFC-Modul zur Verfügung gestellt, sodass die Berechtigungsinformationen über eine NFC-Verbindung an die Schließeinheit 13 übermittelt werden können.

In Fig. 2 ist ein erfindungsgemässiges mobiles Telekommunikationsgerät 14 dargestellt, welches selbst keine Schlüsselfunktion übernimmt. Vielmehr werden die von der zentralen Recheneinheit 1 übermittelten Berechtigungsinformationen erfindungsgemäss auf einen externen RFID-Transponder 15 überspielt. Der RFID-Transponder 15 kann dann unabhängig von dem mobilen Telekommunikationsgerät 14 verwendet werden, um Schließeinheiten 13 zu sperren.

## Patentansprüche

1. Verfahren zur Steuerung der Zutrittskontrolle mit Schließeinheiten (13), insbesondere Schlössern, und elektronischen Schlüsseln (15), bei welchem Zutrittsberechtigungen in einer zentralen Recheneinheit (1) gespeichert und verwaltet werden, die Schlüssel (15) entsprechend der jeweiligen Zutrittsberechtigung mit Berechtigungsinformationen für eine vorgegebene Auswahl an Schließeinheiten (13) programmiert werden, die Berechtigungsinformationen im Falle eines Zutrittswunsches drahtlos von einem Schlüssel (15) an eine Schließeinheit (13) gesendet werden und in der Schließeinheit (13) in Abhängigkeit von den empfangenen Berechtigungsinformationen die Zutrittsberechtigung ermittelt wird, wobei die Programmierung eines Schlüssels (15) das Senden der Berechtigungsinformationen über ein drahtloses Telekommunikationsnetz an ein drahtloses mobiles Telekommunikationsgerät (14) und das Übermitteln der vom mobilen Telekommunikationsgerät (14) empfangenen Berechtigungsinformationen an einen Speicher des Schlüssels (15) umfasst, **dadurch gekennzeichnet, dass** der Schlüssel (15) als externes, unabhängig vom Telekommunikationsgerät (14) als Schlüssel verwendbares Identifikationsmedium (15) ausgebildet ist, das über keine eigene Stromversorgung verfügt, dass die drahtlose Übermittlung der Berechtigungsinformationen vom Schlüssel (15) an die Schließeinheit (13) ohne eigene Stromversorgung des Schlüssels (15) erfolgt, und dass das Übermitteln der vom mobilen Telekommunikationsgerät (14) empfangenen Berechtigungsinformationen an einen Speicher des Schlüssels (15) die Verwendung einer Schreib-/Leseeinrichtung für das externe Identifikationsmedium (15) umfasst, und dass die Ermittlung der Zutrittsberechtigung in der Schließeinheit (13) zusätzlich den Vergleich einer vom Schlüssel (15) empfangenen Schlüsselkennung mit einer in der Schließeinheit (13) gespeicherten Schlüsselkennungsliste umfasst, wobei bei Übereinstimmung der empfangenen Schlüsselkennung mit einer Schlüsselkennung aus der Schlüsselkennungsliste der Zutritt verwehrt wird, und die Schlüsselkennungsliste in der zentralen Recheneinheit (1) gespeichert und verwaltet wird, über das drahtlose Telekommunikationsnetz an das mobile Telekommunikationsgerät (14) übermittelt, von dort mittels der Schreib-/Leseeinrichtung auf das externe Identifikationsmedium (15) übertragen und drahtlos von dem Identifikationsmedium (15) an die Schließeinheit (13) gesendet und in der Schließeinheit (13) gespeichert wird.

2. Verfahren nach Anspruch 1, **dadurch gekennzeichnet, dass** die Berechtigungsinformation wenigstens eine Schlosskennung enthält.

3. Verfahren nach Anspruch 2, **dadurch gekennzeichnet, dass** die Ermittlung der Zutrittsberechtigung in der Schließeinheit den Vergleich der empfangenen Berechtigungsinformationen mit der in der Schließeinheit gespeicherten eigenen Schlosskennung umfasst.

4. Verfahren nach einem der Ansprüche 1 bis 3, **dadurch gekennzeichnet, dass** die Berechtigungsinformationen im Schlüssel verschlüsselt vorliegen.

5. Verfahren nach einem der Ansprüche 1 bis 4, **dadurch gekennzeichnet, dass** alle Berechtigungsinformationen mit einem allgemeinen Systemschlüssel verschlüsselt vorliegen.

6. Verfahren nach einem der Ansprüche 1 bis 5, **dadurch gekennzeichnet, dass** den Schließeinheiten jeweils ein schlossindividueller Verschlüsselungsschlüssel zugeordnet wird, dass die Berechtigungsinformationen für eine Schließeinheit in der zentralen Recheneinheit mit dem jeweils zugeordneten schloss-individuellen Verschlüsselungsschlüssel verschlüsselt und als schloss-individuell verschlüsselte Berechtigungsinformationen an das Telekommunikationsgerät bzw. den Schlüssel gesendet und dort gespeichert werden und dass die schloss-individuell verschlüsselten Berechtigungsinformationen in der Schließeinheit unter Verwendung des dort gespeicherten, zugeordneten schloss-individuellen Verschlüsselungsschlüssels entschlüsselt werden.

7. Verfahren nach einem der Ansprüche 1 bis 6, **dadurch gekennzeichnet, dass** den Schlüsseln jeweils ein schlüsselindividueller Verschlüsselungsschlüssel zugeordnet wird, dass die Berechtigungsinformationen für einen Schlüssel in der zentralen Recheneinheit mit dem jeweils zugeordneten schlüssel-individuellen Verschlüsselungsschlüssel verschlüsselt und als schlüssel-individuell verschlüsselte Berechtigungsinformationen an das Telekommunikationsgerät bzw. den Schlüssel gesendet und dort gespeichert werden und dass die schlüssel-individuell verschlüsselten Berechtigungsinformationen im Schlüssel unter Verwendung des dort gespeicherten, zugeordneten schlüssel-individuellen Verschlüsselungsschlüssels entschlüsselt werden.

8. Verfahren nach Anspruch 6 und 7, **dadurch gekennzeichnet, dass** die Berechtigungsinformationen in der zentralen Recheneinheit zuerst jeweils mit dem schloss-individuellen Verschlüsselungsschlüssel verschlüsselt werden, dass die schloss-individuell verschlüsselten Berechtigungsinformationen danach mit dem schlüssel-individuellen Verschlüsselungsschlüssel verschlüsselt werden, dass die schloss- und schlüssel-individuell verschlüsselten Berechtigungsinformationen an das Telekommunikationsgerät bzw. den Schlüssel gesendet und dort gespeichert werden, dass die schloss- und schlüssel-individuell verschlüsselten Berechtigungsinformationen im Schlüssel unter Verwendung des im Schlüssel gespeicherten schlüssel-individuellen Verschlüsselungsschlüssels entschlüsselt werden, dass die (teil-)entschlüsselten Berechtigungsinformationen an die Schließeinheit übermittelt und in der Schließeinheit unter Verwendung des dort gespeicherten schloss-individuellen Verschlüsselungsschlüssels entschlüsselt werden.

9. Verfahren nach einem der Ansprüche 1 bis 8, **dadurch gekennzeichnet, dass** das Übermitteln der Berechtigungsinformationen vom Schlüssel an die Schließeinheit über eine gesicherte Verbindung erfolgt.

10. Verfahren nach einem der Ansprüche 1 bis 9, **dadurch gekennzeichnet, dass** das Senden der Berechtigungsinformationen von der zentralen Recheneinheit an das mobile Telekommunikationsgerät bzw. den Schlüssel über eine gesicherte Verbindung erfolgt.

11. Verfahren nach einem der Ansprüche 1 bis 10, **dadurch gekennzeichnet, dass** das Übermitteln der Berechtigungsinformationen vom Schlüssel an die Schließeinheit unter Verwendung von RFID erfolgt.

12. Verfahren nach einem der Ansprüche 1 bis 11, **dadurch gekennzeichnet, dass** das Übermitteln der Berechtigungsinformationen vom Schlüssel an die Schließeinheit unter Verwendung von Nahfeldkommunikation, beispielsweise nach dem NFC-Standard, erfolgt.

13. Verfahren nach einem der Ansprüche 1 bis 12, **dadurch gekennzeichnet, dass** die Berechtigungsinformationen und/oder die Schlüsselkennungsliste als Kurztextmitteilung über das drahtlose Telekommunikationsnetz an das mobiles Telekommunikationsgerät übermittelt werden.

14. Verfahren nach einem der Ansprüche 1 bis 13, **dadurch gekennzeichnet, dass** die Ermittlung der Zutrittsberechtigung in der Schließeinheit lediglich auf Grund der vom Schlüssel erhaltenen Daten erfolgt.

15. Verfahren nach einem der Ansprüche 1 bis 14, **dadurch gekennzeichnet, dass** das Senden der Berechtigungsinformationen von der zentralen Recheneinheit an das mobile Telekommunikationsgerät als Antwort auf eine vom Benutzer vom mobilen Telekommunikationsgerät an die zentrale Recheneinheit gesendete Anfrage erfolgt.

16. Verfahren nach einem der Ansprüche 1 bis 15, **dadurch gekennzeichnet, dass** Statusinformationen der Schließeinheit, wie z.B. Batterieladezustand, Log-Daten, Schließzustand oder dgl., drahtlos an den Schlüssel bzw. das mobile Telekommunikationsgerät übertragen und vom mobilen Telekommunikationsgerät über das drahtlose Telekommunikationsnetz an die zentrale Recheneinheit versendet werden.

17. Vorrichtung zur Zutrittskontrolle, insbesondere zur Durchführung des Verfahrens nach einem der Ansprüche 1 bis 16, umfassend
- eine Mehrzahl von Schließeinheiten (13), insbesondere Schlössern, und Schlüsseln (15) zum berührungslosen Sperren und Entsperren der Schließeinheiten (13),
- eine zentrale Recheneinheit (1) zum Speichern und Verwalten von Zutrittsberechtigungen,
- Mittel, um die Schlüssel (15) entsprechend der jeweiligen Zutrittsberechtigung mit Berechtigungsinformationen für eine vorgegebene Auswahl an Schließeinheiten (13) zu programmieren,
- Mittel zum drahtlosen Übermitteln der Berechtigungsinformationen vom Schlüssel (15) an die Schließeinheit (13), wobei die Schließeinheit (13) jeweils eine Auswerteschaltung aufweist, um die Zutrittsberechtigung auf Grund der erhaltenen Berechtigungsinformationen zu ermitteln, wobei die Vorrichtung weiters wenigstens ein drahtloses mobiles Telekommunikationsgerät (14) umfasst, dass die Mittel zum Programmieren der Schlüssel Mittel zum Senden der Berechtigungsinformationen über ein drahtloses Telekommunikationsnetz an eine erste Kommunikationsschnittstelle des mobilen Telekommunikationsgeräts (14) umfassen und dass Mittel zum Übermitteln der vom mobilen Telekommunikationsgerät (14) empfangenen Berechtigungsinformationen an einen Speicher des Schlüssels (15) vorgesehen sind, **dadurch gekennzeichnet, dass** der Schlüssel (15) als externes, unabhängig vom Telekommunikationsgerät als Schlüssel verwendbares Identifikationsmedium (15) ausgebildet ist, das über keine eigene Stromversorgung verfügt, und dass die Mittel zum Übermitteln der vom mobilen Telekommunikationsgerät (14) empfangenen Berechtigungsinformationen an einen Speicher des Schlüssels eine Schreib-/Leseeinrichtung für das externe Identifikationsmedium (15) umfasst, und dass die Schließeinheit (13) einen Speicher für eine Schlüsselkennungsliste aufweist, der mit der Auswerteschaltung derart zusammenwirkt, dass die Ermittlung der Zutrittsberechtigung in der Schließeinheit (13) zusätzlich den Vergleich einer vom Schlüssel empfangenen Schlüsselkennung mit einer in der Schließeinheit gespeicherten Schlüsselkennungsliste umfasst, wobei bei Übereinstimmung der empfangenen Schlüsselkennung mit einer Schlüsselkennung aus der Schlüsselkennungsliste der Zutritt verwehrt wird und dass die zentrale Recheneinheit (1) einen Speicher für die Schlüsselkennungsliste aufweist und Mittel zum Übermitteln der Schlüsselkennungsliste über das drahtlose Telekommunikationsnetz an das mobile Telekommunikationsgerät (14) vorgesehen sind, die Schreib-/Leseeinrichtung zum Übertragen der Schlüsselkennungsliste vom Telekommunikationsgerät (14) auf das externe Identifikationsmedium (15) ausgebildet ist und Mittel zum drahtlosen Senden der Schlüsselkennungsliste von dem Identifikationsmedium (15) an die Schließeinheit (13) vorgesehen sind.

18. Vorrichtung nach Anspruch 17, **dadurch gekennzeichnet, dass** die Berechtigungsinformation wenigstens eine Schlosskennung enthält.

19. Vorrichtung nach einem der Ansprüche 17 bis 18, **dadurch gekennzeichnet, dass** die Auswerteschaltung der Schließeinheit eine Vergleichsschaltung zum Vergleichen der empfangenen Berechtigungsinformationen mit der eigenen Schlosskennung umfasst.

20. Vorrichtung nach einem der Ansprüche 17 bis 19, **dadurch gekennzeichnet, dass** die Berechtigungsinformationen im Schlüssel verschlüsselt vorliegen.

21. Vorrichtung nach einem der Ansprüche 17 bis 20, **dadurch gekennzeichnet, dass** alle Berechtigungsinformationen mit einem allgemeinen Systemschlüssel verschlüsselt vorliegen.

22. Vorrichtung nach einem der Ansprüche 17 bis 21, **dadurch gekennzeichnet, dass** die Berechtigungsinformationen schloss-individuell verschlüsselt vorliegen und dass die Auswerteschaltung eine Entschlüsselungseinrichtung umfasst.

23. Vorrichtung nach einem der Ansprüche 17 bis 22, **dadurch gekennzeichnet, dass** die Berechtigungsinformationen im Schlüssel schlüssel-individuell verschlüsselt vorliegen und dass der Schlüssel eine Entschlüsselungseinrichtung umfasst.

24. Vorrichtung nach einem der Ansprüche 17 bis 23, **dadurch gekennzeichnet, dass** Mittel zum Herstellen einer gesicherten Verbindung für das Übermitteln der Berechtigungsinformationen vom Schlüssel an die Schließeinheit vorgesehen sind.

25. Vorrichtung nach einem der Ansprüche 17 bis 24, **dadurch gekennzeichnet, dass** Mittel zum Herstellen einer gesicherten Verbindung für das Senden der Berechtigungsinformationen von der zentralen Recheneinheit an das mobile Telekommunikationsgerät bzw. den Schlüssel vorgesehen sind

26. Vorrichtung nach einem der Ansprüche 17 bis 25, **dadurch gekennzeichnet, dass** der Schlüssel als RFID-Datenträger ausgebildet ist.

27. Vorrichtung nach einem der Ansprüche 17 bis 26, **dadurch gekennzeichnet, dass** die Mittel zum drahtlosen Übermitteln der Berechtigungsinformationen vom Schlüssel an die Schließeinheit für die Nahfeldkommunikation, beispielsweise nach dem NFC-Standard, ausgebildet sind.

28. Vorrichtung nach einem der Ansprüche 17 bis 27, **dadurch gekennzeichnet, dass** ein Kurztextmitteilungsdienst vorgesehen ist zum Übermitteln der Berechtigungsinformationen und/oder der Schlüsselkennungsliste als Kurztextmitteilung über das drahtlose Telekommunikationsnetz an das mobiles Telekommunikationsgerät.

29. Vorrichtung nach einem der Ansprüche 17 bis 28, **dadurch gekennzeichnet, dass** die Schließeinheiten als autonome Einheiten ohne Netzwerkanbindung ausgebildet sind, wobei die Ermittlung der Zutrittsberechtigung in der Schließeinheit lediglich auf Grund der vom Schlüssel erhaltenen Daten erfolgt.

30. Vorrichtung nach einem der Ansprüche 17 bis 29, **dadurch gekennzeichnet, dass** die Schließeinheit einen Speicher für Statusinformationen der Schließeinheit, wie z.B. Batterieladezustand, Log-Daten, Schließzustand oder dgl., aufweist und Mittel zum drahtlosen Übertragen der Statusinformationen an den Schlüssel bzw. das mobile Telekommunikationsgerät.

## Claims

1. A method for controlling access control with locking units (13), in particular locks, and electronic keys (15), in which access authorizations are stored and administered in a central computation unit (1), the keys (15) are programmed with authorization information for a predetermined selection of locking units (13) as a function of the respective access authorization, the authorization information is wirelessly transmitted from a key (15) to a locking unit (13) if access is sought, and the access authorization is determined in the locking unit (13) as a function of the received authorization information, the programming of a key (15) comprising transmitting the authorization information via a wireless telecommunication network to a wireless mobile telecommunication device (14) and transferring the authorization information received by the mobile telecommunication device to a memory of the key (15), **characterized in that** the key (15) is designed as an external identification medium (15) to be used as a key independently of the telecommunication device (14) and not having its own power supply, that the wireless transmission of the authorization information from the key (15) to the locking unit (13) is performed without the key's (15) own power supply, and that the transfer of the authorization information received by the mobile telecommunication device (14) to a memory of the key (15) comprises using a write/read device for the external identification medium (15), and that the determination of the access authorization in the locking unit (13) additionally comprises comparing a key identifier received by the key with a key identifier list stored in the locking unit (13), wherein, if there is a match of the received key identifier with a key identifier from the key identifier list, the access is denied, and the key identifier list is stored and administered in the central computation unit (1), transmitted to the mobile telecommunication device (14) via the wireless telecommunication network, communicated from there to the external identification medium (15) by means of the write/read device, and wirelessly sent from the identification medium (15) to the locking unit (13), and stored in the locking unit (13).

2. A method according to claim 1, **characterized in that** the authorization information contains at least one lock identifier.

3. A method according to claim 2, **characterized in that** the determination of the access authorization in the locking unit comprises comparing the received authorization information with its own key identifier stored in the locking unit.

4. A method according to any one of claims 1 to 3, **characterized in that** the authorization information in the key is provided in encrypted form.

5. A method according to any one of claims 1 to 4, **characterized in that** any authorization information is provided encrypted with a general system key.

6. A method according to any one of claims 1 to 5, **characterized in that** a lock-individual encryption key is each assigned to the locking units, that the authorization information for a locking unit in the central computation unit is encrypted with the respectively assigned lock-individual encryption key and transmitted as a lock-individually encrypted authorization information to the telecommunication device, or the key, and stored there, and that the lock-individually encrypted authorization information is decrypted in the locking unit by using the respectively assigned lock-individual encryption key stored there.

7. A method according to any one of claims 1 to 6, **characterized in that** a lock-individual encryption key is each assigned to the keys, that the authorization information for a key in the central computation unit is encrypted with the respectively assigned key-individual encryption key and transmitted as a key-individually encrypted authorization information to the telecommunication device, or the key, and stored there, and that the key-individually encrypted authorization information is decrypted in the key by using the respectively assigned key-individual encryption key stored there.

8. A method according to claims 6 and 7, **characterized in that** the authorization information in the central computation unit is each initially encrypted with the lock-individual encryption key, that the lock-individually encrypted authorization information is subsequently encrypted with the key-individual encryption key, that the lock-individually and the key-individually encrypted authorization information is transmitted to the telecommunication device, or the key, and stored there, that the lock-individually and the key-individually encrypted authorization information is decrypted in the key by using the key-individual encryption key stored in the key, that the (partially) decrypted authorization information is transmitted to the locking unit and decrypted in the locking unit by using the lock-individual encryption key stored there.

9. A method according to any one of claims 1 to 8, **characterized in that** the transmitting of the authorization information from the key to the locking unit is performed via a secure connection.

10. A method according to any one of claims 1 to 9, **characterized in that** the transmitting of the authorization information from the central computation unit to the mobile telecommunication device, or the key, is performed via a secure connection.

11. A method according to any one of claims 1 to 10, **characterized in that** the transmitting of the authorization information from the key to the locking unit is performed by using RFID.

12. A method according to any one of claims 1 to 11, **characterized in that** the transmitting of the authorization information from the key to the locking unit is performed by using near-field communication, for instance according to the NFC standard.

13. A method according to any one of claims 1 to 12, **characterized in that** the authorization information and/or the key identifier list are transmitted as a short-text message to the mobile telecommunication device via the wireless telecommunication network.

14. A method according to any one of claims 1 to 13, **characterized in that** the determination of the access authorization in the locking unit is only performed based on the data received by the key.

15. A method according to any one of claims 1 to 14, **characterized in that** the transmitting of the authorization information from the central computation unit to the mobile telecommunication device is performed in response to a request sent by the user from the mobile telecommunication device to the central computation unit.

16. A method according to any one of claims 1 to 15, **characterized in that** status information of the locking unit, such as the battery charging level, log data, the locking state or the like, is wirelessly communicated to the key, or to the mobile telecommunication device, and from the mobile telecommunication device is sent to the central computation unit via the wireless telecommunication network.

17. A device for access control, in particular for carrying out the method according to any one of claims 1 to 16, comprising
- a plurality of locking units (13), in particular locks, and keys (15) for locking and unlocking the locking units (13) in a contactless manner,
- a central computation unit (1) for storing and administering access authorizations,
- means for programming the keys (15) with authorization information for a predetermined selection of locking units (13) as a function of the respective access authorization,
- means for wirelessly transmitting the authorization information from the key (15) to the locking unit (13), wherein each locking unit (13) comprises an evaluation circuit for determining the access authorization based on the received authorization information, wherein the device further comprises at least one wireless, mobile telecommunication device (14), wherein the means for programming the keys comprise means for sending the authorization information via a wireless telecommunication network to a first communication interface of the mobile telecommunication device (14), and wherein means for transferring the authorization information received by the mobile telecommunication device (14) to a memory of the key (15) are provided, **characterized in that** the key (15) is designed as an external identification medium (15) to be used as a key independently of the telecommunication device and not having its own power supply, and that the means for transmitting the authorization information received by the mobile telecommunication device (14) to a memory of the key comprises a write/read device for the external identification medium (15), and that the locking unit (13) comprises a memory for a key identifier list, which cooperates with the evaluation circuit such that the determination of the access authorization in the locking unit (13) additionally comprises the comparison of a key identifier received by the key with a key identifier list stored in the locking unit, wherein, if there is a match of the received key identifier with a key identifier from the key identifier list, the access is denied, and that the central computation unit (1) comprises a memory for the key identifier list, and means for transmitting the key identifier list via the wireless telecommunication network to the mobile telecommunication device (14) are provided, the write/read device is designed to communicate the key identifier list from the telecommunication device (14) to the external identification medium (15), and means for wirelessly sending the key identifier list from the identification medium (15) to the locking unit (13) are provided.

18. A device according to claim 17, **characterized in that** the authorization information contains at least one lock identifier.

19. A device according to any one of claims 17 to 18, **characterized in that** the evaluation circuit of the locking unit comprises a comparator circuit for comparing the received authorization information with its own key identifier.

20. A device according to any one of claims 17 to 19, **characterized in that** the authorization information in the key is provided in encrypted form.

21. A device according to any one of claims 17 to 20, **characterized in that** any authorization information is provided encrypted with a general system key.

22. A device according to any one of claims 17 to 21, **characterized in that** the authorization information is provided in a lock-individually encrypted form, and that the evaluation circuit comprises a decryption device.

23. A device according to any one of claims 17 to 12, **characterized in that** the authorization information in the key is provided in a key-individually encrypted form, and that the key comprises a decryption device.

24. A device according to any one of claims 17 to 23, **characterized in that** means for establishing a secure connection for transmitting the authorization information from the key to the locking unit are provided.

25. A device according to any one of claims 17 to 24, **characterized in that** means for establishing a secure connection for sending the authorization information from the central computation unit to the mobile telecommunication device, or the key, are provided.

26. A device according to any one of claims 17 to 25, **characterized in that** the key is designed as an RFID data carrier.

27. A device according to any one of claims 17 to 26, **characterized in that** the means for wirelessly transmitting the authorization information from the key to the locking unit are designed for near-field communication, for instance according to the NFC standard.

28. A device according to any one of claims 17 to 27, **characterized in that** a short-text message service is provided for transmitting the authorization information and/or the key identifier list as a short-text message to the mobile telecommunication device via the wireless telecommunication network.

29. A device according to any one of claims 17 to 28, **characterized in that** the locking units are designed as autonomous units without connection to the network, wherein the determination of the access authorization in the locking unit is only performed based on the data received by the key.

30. A method according to any one of claims 17 to 29, **characterized in that** the locking unit comprises a memory for status information of the locking unit, such as the battery charging level, log data, the locking state or the like, and means for wirelessly transmitting the status information to the key, or to the mobile telecommunication device.

## Revendications

1. Procédé de commande du contrôle d'accès avec des unités de fermeture (13), en particulier des serrures, et des clés (15) électroniques,
où des autorisations d'accès sont mémorisées et gérées dans une unité centrale de calcul (1), les clés (15) sont programmées conformément à l'autorisation d'accès respective avec des informations d'autorisation pour une sélection prédéfinie d'unités de fermeture (13), les informations d'autorisation sont envoyées sans fil dans le cas d'un souhait d'accès d'une clé (15) à une unité de fermeture (13) et, dans l'unité de fermeture (13), l'autorisation d'accès est déterminée en fonction des informations d'autorisation reçues,
dans lequel la programmation d'une clé (15) comprend l'envoi des informations d'autorisation par le biais d'un réseau de télécommunication sans fil à un appareil de télécommunication mobile sans fil (14) et le transfert des informations d'autorisation reçues par l'appareil de télécommunication mobile (14) à une mémoire de la clé (15), **caractérisé en ce que** la clé (15) est conçue en tant que support d'identification (15) externe, utilisable indépendamment de l'appareil de télécommunication (14) en tant que clé, qui ne dispose pas de sa propre alimentation électrique, que le transfert sans fil des informations d'autorisation de la clé (15) à l'unité de fermeture (13) est effectué sans la propre alimentation électrique de la clé (15), et que le transfert des informations d'autorisation reçues par l'appareil de télécommunication mobile (14) à une mémoire de la clé (15) comprend l'utilisation d'un dispositif d'écriture/lecture pour le support d'identification (15) externe, et que la détermination de l'autorisation d'accès dans l'unité de fermeture (13) comprend en plus la comparaison d'un indicatif de clé reçu par la clé (15) à une liste d'indicatifs de clé mémorisée dans l'unité de fermeture (13), dans lequel, en cas de concordance de l'indicatif de clé reçu avec un indicatif de clé dans la liste d'indicatifs de clé, l'accès est refusé, et la liste d'indicatifs de clé est mémorisée et gérée dans l'unité centrale de calcul (1), est transférée par le biais du réseau de télécommunication sans fil à l'appareil de télécommunication mobile (14), d'où, au moyen du dispositif d'écriture/lecture, elle est transmise au support d'identification (15) externe et envoyée sans fil du support d'identification (15) à l'unité de fermeture (13) et mémorisée dans l'unité de fermeture (13) .

2. Procédé selon la revendication 1, **caractérisé en ce que** l'information d'autorisation contient au moins un indicatif de serrure.

3. Procédé selon la revendication 2, **caractérisé en ce que** la détermination de l'autorisation d'accès dans l'unité de fermeture comprend la comparaison des informations d'autorisation reçues au propre indicatif de serrure mémorisé dans l'unité de fermeture.

4. Procédé selon l'une quelconque des revendications 1 à 3, **caractérisé en ce que** les informations d'autorisation sont présentes chiffrées dans la clé.

5. Procédé selon l'une quelconque des revendications 1 à 4, **caractérisé en ce que** toutes les informations d'autorisation sont présentes chiffrées avec une clé système générale.

6. Procédé selon l'une quelconque des revendications 1 à 5, **caractérisé en ce qu'**une clé de chiffrement particulière à une serrure est attribuée à chacune des unités de fermeture, que les informations d'autorisation pour une unité de fermeture sont chiffrées dans l'unité centrale de calcul avec la clé de chiffrement particulière à une serrure attribuée respective et sont envoyées en tant qu'informations d'autorisation chiffrées particulières à une serrure à l'appareil de télécommunication ou à la clé et y sont mémorisées, et que les informations d'autorisation chiffrées particulières à une serrure sont déchiffrées dans l'unité de fermeture en utilisant la clé de chiffrement particulière à une serrure attribuée qui y est mémorisée.

7. Procédé selon l'une quelconque des revendications 1 à 6, **caractérisé en ce qu'**une clé de chiffrement particulière à une clé est attribuée à chacune des clés, que les informations d'autorisation pour une clé sont chiffrées dans l'unité centrale de calcul avec la clé de chiffrement particulière à une clé attribuée respective et sont envoyées en tant qu'informations d'autorisation chiffrées particulières à une clé à l'appareil de télécommunication ou à la clé et y sont mémorisées, et que les informations d'autorisation chiffrées particulières à une clé sont déchiffrées dans la clé en utilisant la clé de chiffrement particulière à une clé attribuée qui y est mémorisée.

8. Procédé selon les revendications 6 et 7, **caractérisé en ce que** les informations d'autorisation sont d'abord chiffrées dans l'unité centrale de calcul avec la clé de chiffrement particulière à une clé, que les informations d'autorisation chiffrées particulières à une serrure sont ensuite chiffrées avec la clé de chiffrement particulière à une clé, que les informations d'autorisation chiffrées particulières à une serrure et à une clé sont envoyées à l'appareil de télécommunication ou à la clé et y sont mémorisées, que les informations d'autorisation chiffrées particulières à une serrure et à une clé sont déchiffrées dans la clé en utilisant la clé de chiffrement particulière à une clé mémorisée dans la clé, que les informations d'autorisation (en partie) déchiffrées sont transférées à l'unité de fermeture et sont déchiffrées dans l'unité de fermeture en utilisant la clé de chiffrement particulière à une clé qui y est mémorisée.

9. Procédé selon l'une quelconque des revendications 1 à 8, **caractérisé en ce que** le transfert des informations d'autorisation de la clé à l'unité de fermeture est effectué par le biais d'une liaison sécurisée.

10. Procédé selon l'une quelconque des revendications 1 à 9, **caractérisé en ce que** l'envoi des informations d'autorisation de l'unité centrale de calcul à l'appareil de télécommunication mobile ou à la clé est effectué par le biais d'une liaison sécurisée.

11. Procédé selon l'une quelconque des revendications 1 à 10, **caractérisé en ce que** le transfert des informations d'autorisation de la clé à l'unité de fermeture est effectué en utilisant la RFID.

12. Procédé selon l'une quelconque des revendications 1 à 11, **caractérisé en ce que** le transfert des informations d'autorisation de la clé à l'unité de fermeture est effectué en utilisant une communication en champ proche, par exemple selon la norme NFC.

13. Procédé selon l'une quelconque des revendications 1 à 12, **caractérisé en ce que** les informations d'autorisation et/ou la liste d'indicatifs de clé sont transmises en tant que communication par minimessages par le biais du réseau de télécommunication sans fil à l'appareil de télécommunication mobile.

14. Procédé selon l'une quelconque des revendications 1 à 13, **caractérisé en ce que** la détermination de l'autorisation d'accès est effectuée dans l'unité de fermeture seulement en raison des données contenues dans la clé.

15. Procédé selon l'une quelconque des revendications 1 à 14, **caractérisé en ce que** l'envoi des informations d'autorisation de l'unité centrale de calcul à l'appareil de télécommunication mobile est effectué en tant que réponse à une demande envoyée par l'utilisateur de l'appareil de télécommunication mobile à l'unité centrale de calcul.

16. Procédé selon l'une quelconque des revendications 1 à 15, **caractérisé en ce que** des informations d'état de l'unité de fermeture, telles que par exemple état de charge de batterie, données de journal, état de fermeture etc., sont transmises sans fil à la clé ou à l'appareil de télécommunication mobile et sont envoyées de l'appareil de télécommunication mobile à l'unité centrale de calcul par le biais du réseau de télécommunication sans fil.

17. Dispositif de contrôle d'accès, en particulier pour l'exécution du procédé selon l'une quelconque des revendications 1 à 16, comprenant
- une pluralité d'unités de fermeture (13), en particulier des serrures, et de clés (15) pour le verrouillage et le déverrouillage sans contact des unités de fermeture (13),
- une unité centrale de calcul (1) pour la mémorisation et la gestion d'autorisations d'accès,
- un moyen pour programmer les clés (15) conformément à l'autorisation d'accès respectif avec des informations d'autorisation pour une sélection prédéfinie d'unités de fermeture (13),
- un moyen pour le transfert sans fil des informations d'autorisation de la clé (15) à l'unité de fermeture (13),
dans lequel chaque unité de fermeture (13) présente un circuit d'évaluation pour déterminer l'autorisation d'accès en raison des informations d'autorisation obtenues, dans lequel le dispositif comprend en outre au moins un appareil de télécommunication mobile sans fil (14), que le moyen pour la programmation de la clé comprend un moyen pour envoyer des informations d'autorisation par le biais d'un réseau de télécommunication sans fil à une première interface de communication de l'appareil de télécommunication mobile (14) et qu'il est prévu un moyen pour le transfert des informations d'autorisation reçues par l'appareil de télécommunication mobile (14) à une mémoire de la clé (15), **caractérisé en ce que** la clé (15) est conçue en tant que support d'identification (15) externe, utilisable indépendamment de l'appareil de télécommunication en tant que clé, qui ne dispose pas de sa propre alimentation électrique, et que le moyen pour le transfert des informations d'autorisation reçues par l'appareil de télécommunication mobile (14) à une mémoire de la clé comprend un dispositif d'écriture/lecture pour le support d'identification (15) externe, et que l'unité de fermeture (13) présente une mémoire pour une liste d'indicatifs de clé, qui coopère avec le circuit d'évaluation de manière que la détermination de l'autorisation d'accès dans l'unité de fermeture (13) comprend en plus la comparaison d'un indicatif de clé reçu par la clé à une liste d'indicatifs de clé mémorisée dans l'unité de fermeture, dans lequel, en cas de concordance de l'indicatif de clé reçu avec un indicatif de clé dans la liste d'indicatifs de clé, l'accès est refusé et que l'unité centrale de calcul (1) présente une mémoire pour la liste d'indicatifs de clé et il est prévu un moyen pour le transfert de la liste d'indicatifs de clé par le biais du réseau de télécommunication sans fil à l'appareil de télécommunication mobile (14),
le dispositif d'écriture/lecture est conçu pour la transmission de la liste d'indicatifs de clé de l'appareil de télécommunication (14) au support d'identification (15) externe et un moyen est prévu pour l'envoi sans fil de la liste d'indicatifs de clé du support d'identification (15) à l'unité de fermeture (13) .

18. Dispositif selon la revendication 17, **caractérisé en ce que** l'information d'autorisation contient au moins un indicatif de serrure.

19. Dispositif selon l'une quelconque des revendications 17 à 18, **caractérisé en ce que** le circuit d'évaluation de l'unité de fermeture comprend un circuit de comparaison pour la comparaison des informations d'autorisation reçues au propre indicatif de serrure.

20. Dispositif selon l'une quelconque des revendications 17 à 19, **caractérisé en ce que** les informations d'autorisation sont présentes chiffrées dans la clé.

21. Dispositif selon l'une quelconque des revendications 17 à 20, **caractérisé en ce que** toutes les informations d'autorisation sont présentes chiffrées avec une clé système générale.

22. Dispositif selon l'une quelconque des revendications 17 à 21, **caractérisé en ce que** les informations d'autorisation particulières à une serrure sont présentes chiffrées et que le circuit d'évaluation comprend un dispositif de déchiffrement.

23. Dispositif selon l'une quelconque des revendications 17 à 22, **caractérisé en ce que** les informations d'autorisation sont présentes chiffrées de manière particulière à la clé dans la clé et que la clé comprend un dispositif de déchiffrement.

24. Dispositif selon l'une quelconque des revendications 17 à 23, **caractérisé en ce qu'**il est prévu un moyen d'établissement d'une liaison sécurisée pour le transfert des informations d'autorisation de la clé à l'unité de fermeture.

25. Dispositif selon l'une quelconque des revendications 17 à 24, **caractérisé en ce qu'**il est prévu un moyen pour l'établissement d'une liaison sécurisée pour l'envoi des informations d'autorisation de l'unité centrale de calcul à l'appareil de télécommunication mobile ou à la clé.

26. Dispositif selon l'une quelconque des revendications 17 à 25, **caractérisé en ce que** la clé est conçue en tant que support de données RFID.

27. Dispositif selon l'une quelconque des revendications 17 à 26, **caractérisé en ce que** le moyen pour le transfert sans fil des informations d'autorisation de la clé à l'unité de fermeture est conçu pour la communication en champ proche, par exemple selon la norme NFC.

28. Dispositif selon l'une quelconque des revendications 17 à 27, **caractérisé en ce qu'**il est prévu un service de minimessagerie pour le transfert des informations d'autorisation et/ou de la liste d'indicatifs de clé en tant que communication par minimessages par le biais du réseau de télécommunication sans fil à l'appareil de télécommunication mobile.

29. Dispositif selon l'une quelconque des revendications 17 à 28, **caractérisé en ce que** les unités de fermeture sont conçues en tant qu'unités autonomes sans raccordement de réseau, dans lequel la détermination de l'autorisation d'accès dans l'unité de fermeture est effectuée seulement en raison des données contenues par la clé.

30. Dispositif selon l'une quelconque des revendications 17 à 29, **caractérisé en ce que** l'unité de fermeture présente une mémoire pour des informations d'état de l'unité de fermeture, telles que par exemple état de charge de batterie, données de journal, état de fermeture etc., et un moyen pour la transmission sans fil des informations d'état à la clé ou à l'appareil de télécommunication mobile.
